# FASCICULE DE BREVET EUROPEEN

(11) **EP 2 892 954 B1**
(45) Date de publication et mention de la délivrance du brevet: **28.12.2016**
(21) Numéro de dépôt: 13759510.4
(22) Date de dépôt: 06.09.2013
(51) Int. Cl.: C08L 23/10, C08K 3/00, C08L 77/00, C08L 51/00

(54) **COMPOSITION DE NANOCOMPOSITE**
NANOKOMPOSITZUSAMMENSETZUNG
NANOCOMPOSITE COMPOSITION

(30) Priorité: 06.09.2012 BE 201200586
(43) Date de publication de la demande: 15.07.2015
(73) Titulaire: NMC S.A., 4731 Eynatten (BE)
(72) Inventeur: MAYERES, Jean-Pierre, B-4700 Eupen (BE); WOSCHEK, Guy, B-4841 Henri-Chapelle (BE); JOB, Denis, B-4031 Angleur (BE); FOUAD, Laoutid, F-59130 Lambersart (FR); PERSENAIRE, Olivier, B-7050 Jurbise (BE); DUBOIS, Philippe Ghislain, B-4260 Ciplet (Braives) (BE); BONNAUD, Leila, F-59300 Valenciennes (FR)
(74) Mandataire: Office Freylinger
(86) Numéro de dépôt international: PCT/EP2013/068506
(87) Numéro de publication internationale: WO 2014/037522

(56) Documents cités:
- WO-A1-2012/018422
- GB-A- 1 118 723
- US-A1- 2010 120 958

## Description

### Domaine technique

La présente invention concerne des compositions de nanocomposite, des mousses comprenant ces compositions de nanocomposite, un procédé pour les produire ainsi que leur utilisation pour fabriquer des articles manufacturés.

### Etat de la technique

Le comportement au feu et la résistance au feu sont des paramètres essentiels à prendre en compte lors de la mise au point d'un matériau. En particulier dans le cas des matériaux thermoplastiques qui sont utilisés dans de nombreux objets de la vie quotidienne et qui doivent donc présenter un risque minimal pour la sécurité des usagers. Les polymères thermoplastiques sont bien connus pour être inflammables et peu résistants au feu. Ils doivent donc être modifiés dans le but de prévenir ou au moins retarder l'incendie.

Des essais d'amélioration de la résistance au feu et du comportement au feu des matériaux thermoplastiques ont été tentés. En particulier, l'utilisation d'additifs tels que des agents retardateurs de flamme dans les matériaux thermoplastiques s'est généralisée. Il existe en l'occurrence différents types d'agent retardateur de flamme. Il peut s'agir entre autres de composés de type minéral, des composés organohalogénés ou les composés organophosphorés. Ces retardateurs de flamme peuvent présenter différents effets selon les polymères avec lesquels ils sont associés.

L'ajout de nanoparticules d'argile en tant qu'additifs (nanocharges inorganiques) dans des mélanges de polymères a également été étudié. Dans un premier temps, l'ajout des nanoparticules d'argile à des mélanges de polymères avait été envisagé dans le but de renforcer les capacités mécaniques des matériaux obtenus. Néanmoins, cet aspect n'a pas été approfondi au vu des problèmes de dispersion de ces nanoparticules d'argile qui survenaient dans ces mélanges. Les nanoparticules d'argile regroupent différents types de d'argile qui sont notamment caractérisées par leur structure. On peut qualifier de nanoparticules d'argile, les particules de : kaolin, montmorillonite, sépiolite, halloysite, chlorite, etc..

Plus récemment, les propriétés de résistance au feu et/ou de comportement au feu de mélanges comprenant des polymères thermoplastiques avec des nanoparticules d'argiles ont été évaluées. En particulier, certaines études se sont intéressées aux propriétés de la montmorillonite et de la sépiolite.

Plusieurs documents de l'état de la technique ont évalué l'influence de la montmorillonite et de la sépiolite sur les capacités d'inflammabilité et/ou de résistance au feu de mélanges de polymères thermoplastiques. Gonzãlez et al (« Fire retardancy behavior of PLA based nanocomposites », Polymer degradation and stability 97 (2012) 248-256) compare dans cette étude les propriétés d'un nanocomposite constitué d'acide polylactique en association avec une nanoparticule d'argile pouvant être soit la montmorillonite modifiée ou la sépiolite. Cette étude démontre que le nanocomposite comprenant le PLA et la sépiolite présente de moins bons résultats concernant la résistance au feu que le nanocomposite comprenant le PLA et la montmorillonite organo-modifiée, en particulier en ce qui concerne le charbonnement du nanocomposite. Ceci est en particulier expliqué en ce que les réseaux entre les canaux de la sépiolite accumuleraient la chaleur et pourraient constituer une source de chaleur qui accélèrerait la décomposition en association avec la source de chaleur extérieure (page 254, colonne droite lignes 2-6). De la même façon, Oddes et al (« Nanocomposites à base de sépiolite : Influence des conditions de mélange et de l'agent compatibilisant sur la dispersion et les propriétés (mécaniques et résistance au feu) », Projet nanostructures Février 2008) décrit que les propriétés de résistance au feu de la sépiolite sont décevantes dans un système comprenant du polypropylène (PP) et du polypropylène greffé d'anhydride maléique (PPgAM). Ceci serait dû au fait que la sépiolite soit incapable de former une couche barrière ou char, entre le matériau et l'oxygène présent dans l'atmosphère (page 29 lignes 1-6) du fait de sa structure en aiguilles et non en feuillets comme la montmorillonite. De façon similaire, Tabuani et al (« Polypropylene nanocomposites, Study of the influence of the nanofillers nature on morphology and material properties », Macromol. Symp, 2011, 301, 114-127) souligne le fait que le nanocomposite comprenant du PP, PPgAM et de la sépiolite ne permet pas d'obtenir la formation d'une couche protectrice entre le matériau et l'oxygène, dû à la structure en aiguilles de la sépiolite au lieu de la structure en feuillets procurée par la montmorillonite. Il est donc connu de l'état de la technique que les particules de nanoparticules d'argile ne présentent pas les mêmes propriétés de résistance thermique et de comportement au feu selon leur nature et en particulier selon leur structure. Les documents GB1,118,723 et US2010/0120958 décrivent l'utilisation de nanoparticules modifiées dans des mélanges de polymères. Le document WO2012018422 décrit l'utilisation de sépiolite naturelle dans des mélanges de polymères.

Il apparaît donc nécessaire de développer de nouvelles compositions de nanocomposites à base de sépiolite présentant de bonnes propriétés au feu.

### Description générale de l'invention

Un objet de la présente invention est de fournir une composition de nanocomposite comprenant un mélange de polymères thermoplastiques et des nanoparticules de sépiolite qui présente de propriétés au feu améliorées.

L'invention a également pour objet le procédé de fabrication de ces compositions de nanocomposite, l'utilisation de ces compositions de nanocomposite, les mousses et les articles manufacturés obtenus à partir de ces compositions de nanocomposite.

Conformément à l'invention, cet objectif est atteint par une composition de nanocomposite comprenant un mélange contenant au moins un polypropylène (PP), au moins un polyamide (PA), au moins un polypropylène greffé d'anhydride maléique (PPgAM) et des nanoparticules de sépiolite.

Par polypropylène, on entend les homopolymères ou les copolymères de propylène. Il peut s'agir d'homopolymères de propylène linéaires ou branchés, de préférence des homopolymères de propylène branchés. Les copolymères de propylène peuvent être linéaires ou branchés, statistiques, séquencés, blocs segmentés ou hétérophasiques, isotactiques, atactiques ou syndiotactiques et/ou leurs mélanges. Il peut s'agir en particulier de copolymères de propylène et d'éthylène ou de copolymères de propylène et de 1-butène.

Le polyamide (PA) est un polymère comprenant une pluralité de fonctions amides (-C(=O)-NH) résultant d'une réaction de polycondensation entre les fonctions acide carboxylique et amine. En particulier le polyamide (PA) peut être e polyamide-6 (PA-6), encore appelé nylon-6 correspondant à un polymère thermoplastique constitué d'une pluralité de motifs de [NH-(CH₂)₅-CO]ₙ ou le polyamide-12 (PA-12) fabriqué par ouverture du cycle lauryllactame.

Le polypropylène greffé anhydride maléique (PPgAM) correspond à un polymère de propylène tel que défini précédemment greffé avec des groupes latéraux d'anhydride maléique.

Par nanocomposite, on entend un mélange comprenant un ou plusieurs polymères ainsi que des nanoparticules d'argile. Plus particulièrement, il s'agit de nanoparticules de sépiolite. Idéalement, ces nanoparticules présentent les dimensions suivantes : une longueur comprise entre 20 à 5000nm et une largeur comprise entre 2 à 60nm avec une épaisseur de 2 à 20nm.

La sépiolite est un minéral du groupe des argiles à structure fibreuse. Il s'agit en particulier d'un silicate naturel de magnésium hydraté appartenant au groupe des phyllosilicates. La formule générale de la sépiolite est Mg₄Si₆O₁₅(OH)₂6(H₂O). La structure de la sépiolite est en double feuillets de type mica. De façon plus spécifique, le motif de base de la sépiolite est formé par deux couches d'unités tétraédriques de silice liées à une couche octaédrique de magnésium par des atomes d'hydrogène. La sépiolite comprend donc une multitude de canaux ou tunnels lui conférant une surface spécifique très importante (environ 300m²/g).

De façon surprenante, les inventeurs ont mis au point une composition de nanocomposite à base de nanoparticules de sépiolite présentant de propriétés au feu améliorées. De surcroît, cette composition de nanocomposite à base de nanoparticules de sépiolite montre des avantages inattendus en comparaison aux compositions de nanocomposites à base de nanoparticules de montmorillonite. En effet, le document Tang et al (« Investigation on polypropylene and polyamide-6 alloys/montmorillonite nanocomposites », Polymer 46, (2004) 5317-5326) décrit les propriétés d'un mélange comprenant du PP, du polyamide-6 (PA-6) dans lequel est ajouté des nanoparticules de montmorillonite organophilique. Ce mélange de polymères thermoplastiques et de montmorillonite est compatibilisé avec du PP-g-AM. Ce document évalue notamment les propriétés au feu de ce mélange. En particulier, la caractérisation des propriétés d'inflammabilité des mélanges a été réalisée en utilisant un cône calorimètre. Ce document enseigne que l'ajout de montmorillonite organophilique permet de réduire significativement le pHRR (peak heat release rate) comparé aux mélanges ne comprenant pas de montmorillonite.

De façon étonnante, et contrairement à ce qui aurait pu être attendu au vu de l'enseignement de l'état de la technique, la présente invention a mis en lumière que la composition de nanocomposite comprenant un mélange contenant au moins un polypropylène, au moins un polyamide, au moins un polypropylène greffé d'anhydride maléique et des nanoparticules de sépiolite présente des avantages significatifs et surprenants.

En effet, l'état de la technique enseigne généralement que les compositions de nanocomposite à base de sépiolite présentent des propriétés au feu moins intéressantes que celles comprenant de la montmorillonite. Cependant, au cours du développement de la présente invention, il a été mis en évidence que l'utilisation de nanoparticules de sépiolite dans une composition comprenant du PP, PA et du PPgAM permettait d'obtenir des résultats significativement supérieurs concernant la formation du char de la composition et le pHRR de la composition, en comparaison à une composition comprenant des nanoparticules de montmorillonite modifiée.

Le char correspond au résidu formé par la composition de nanocomposite après l'exposition au feu. Il a été démontré lors du développement de l'invention (voir partie tests expérimentaux) qu'au cours de l'inflammation de la composition de nanocomposite, l'action combinée de la sépiolite, du PA et du PP-g-AM permet la formation d'un char dont les résistances thermique et mécanique sont renforcées. En effet, sans vouloir être lié par une théorie quelconque, il semble que la sépiolite se loge dans les nodules de PA. De plus, Le PPgAM assure la bonne dispersion de ces nodules de PA. De ce fait, les nodules de PA chargés de nanoparticules de sépiolite sont répartis de façon uniforme. La présence de la sépiolite au sein des nodules de PA conduit à l'augmentation de la vitesse et de la quantité de char formé. La formation de cette couche charbonnée à la surface matériau isole la phase PP de l'oxygène et conduit à la diminution du pHRR.

Le HRR (heat relase rate) représente le taux de dégagement de chaleur lors de la combustion d'un matériau. Le maximum du pic de HRR (pHRR) est paramètre très important dans la mesure où il caractérise l'aptitude du matériau à propager le feu à d'autres objets voisins lors de sa combustion. Ce paramètre est mesuré habituellement en kWatt. L'HRR est représentatif de la puissance d'un feu dégagée. Pour présenter de bonnes propriétés au feu, un matériau doit idéalement présenter une pHRR faible.

De façon préférée, les nanoparticules de sépiolite sont des nanoparticules de type sépiolite naturelle.

Les nanoparticules de sépiolite peuvent présenter les dimensions suivantes : entre 20 à 5000nm et une largeur comprise entre 2 à 60nm avec une épaisseur de 2 à 20nm.

Le PP utilisé dans la composition de nanocomposite est de préférence sélectionné parmi le groupe comprenant les homopolymères de propylène branchés et les copolymères de propylène et d'éthylène (statistiques, blocs, blocs segmentés, hétérophasiques) et /ou leurs mélanges.

Préférentiellement, la composition de nanocomposite comprend une phase majoritaire de PP, c'est à dire dont la quantité est la plus importante dans la composition.

De préférence, le PA est le polyamide-6 (PA-6).

Avantageusement, la composition selon l'invention comprend une quantité de PP comprise entre environ 40 et environ 80% en poids par rapport au poids total de la composition.

Selon un mode de réalisation, la quantité de PA dans la composition de nanocomposite est comprise entre environ 5 et environ 40% en poids par rapport au poids total de la composition.

La composition de nanocomposite peut comprendre entre environ 2 et environ 15 % en poids de nanoparticules de sépiolite par rapport au poids total de la composition et de façon préférée entre 3 et 10% en poids de nanoparticules de sépiolite par rapport au poids total de la composition. En particulier, la composition de nanocomposite comprend au moins 3% et de façon préférée au moins 5% de nanoparticules de sépiolite en poids par rapport au poids total de la composition de nanocomposite.

La composition de nanocomposite comprend de façon préférée entre 0,5 et 15% de PPgAM en poids par rapport au poids total de la composition de nanocomposite.

De façon avantageuse, la composition de nanocomposite comprend entre environ 41 et environ 61% en poids de PP, entre environ 30 et environ 40% de PA, entre environ 5 et environ 12% de PP-g-AM et entre environ 4 et environ 7% de nanoparticules de sépiolite par rapport au poids total de la composition.

Selon un mode de réalisation, la composition de nanocomposite comprend un mélange de : un ou plusieurs PP, un ou plusieurs PA, de préférence PA-6, un ou plusieurs PPgAM et des nanoparticules de sépiolite, de préférence de type sépiolite naturelle.

La composition de nanocomposite peut en outre comprendre un ou plusieurs composés retardateurs de flamme. Ces composés retardateurs de flamme peuvent être sélectionnés parmi le groupe constitué par des phosphates, des polyphosphates, des phosphinates, des phosphites ou leurs dérivés.

En particulier, le composé retardateur de flamme est le polyphosphate d'ammonium.

La quantité de composé retardateur de flamme est comprise entre environ 0,01 et environ 20% en poids par rapport au poids total de la composition, de préférence entre environ 5 et environ 15% en poids par rapport au poids total de la composition.

La composition de nanocomposite peut en outre comprendre un ou plusieurs additifs sélectionnés parmi le groupe comprenant : anti-oxydants, anti-UV, anti-statiques, nucléateurs de cristallisation, lubrifiants, absorbeurs et/ou réflecteurs d'infra-rouge, couleurs, charges de renforcement, agents d'oxodégradation...

De plus, la quantité de ce ou ces additif(s) est de préférence comprise entre environ 0,01 et environ 52,5% en poids par rapport au poids total de la composition.

Le procédé de fabrication de la composition de nanocomposite selon l'invention comprend généralement les étapes de :

- préparation d'un pré-mélange (masterbatch) comprenant du PPgAM et 30% de nanoparticules de sépiolite,

- mélange du pré-mélange (masterbatch) obtenu précédemment avec du PP et du PA.

La préparation préalable de ce masterbatch permet de localiser rapidement une grande quantité de sépiolite dans les nodules de PA ce qui entraîne un meilleur charbonnement du PA lors de la combustion. L'utilisation du PPgAM permet également d'améliorer la dispersion des nodules de PA et la réduction de leur taille.

Un autre aspect de l'invention concerne un article manufacturé comprenant la composition de nanocomposite selon l'invention et l'utilisation des compositions de nanocomposite pour fabriquer des articles manufacturés. Il peut en particulier s'agir de : carpettes, pièces extrudées ou moulées dans le domaine des moyens de transports (voiture, train, bateau, avion, etc...), dans les bâtiments, les articles ménagers ou de loisirs...

La présente invention concerne également les mousses obtenues à partir de composition de nanocomposite selon l'invention. Ces mousses comprennent en outre un ou plusieurs agents de moussage chimique et/ou physique. Ces agents de moussage chimique peuvent être sélectionnés parmi l'azobisisobutyronitrile, l'azodicarbonamide, la dinitroso-pentaméthylène-tétramine, le 4,4'-oxybis(benzènesulfonylhydrazide), le diphénylsulfone-3,3'-disulfohydrazide, le benzène-1,3-disulfohydrazide, le p-toluènesulfonylsemicarbazide ; l'acide citrique, le bicarbonate de soude et leurs mélanges. Préférentiellement, l'agent de moussage physique est sélectionné parmi l'isobutane, l'azote, le CO₂ le cas échéant sous forme supercritique et les alcanes en C₂-C₅. Les mousses peuvent en outre comprendre un ou plusieurs additifs sélectionnés parmi le groupe constitué par : les régulateurs d'échange gazeux, les nucléateurs de cellules, les anti-oxydants, les anti-UV, les anti-statiques, les lubrifiants, les absorbeurs et/ou les réflecteurs d'infra-rouge, les couleurs, les charges de renforcement, les agents d'oxo-dégradation...

La présente invention s'étend également aux profilés de mousse, aux articles et produits obtenus à partir de ces mousses, par exemple des mousses ayant des fonctions d'isolation thermique, d'emballage protectif, de calage, de loisir ou d'ornement, utilisables dans les moyens de transport, les bâtiments, les articles de loisir, les articles de décoration,...

En particulier, le procédé de fabrication des mousses de polypropylène(s) et de polyamide(s) et de polypropylène(s) greffé(s) à l'anhydride maléique et de nanoparticules de sépiolite selon la présente invention comprend de préférence les étapes de :
- dosage du ou des polypropylène(s), du ou des polyamide(s), du ou des polypropylènes greffés à l'anhydride maléique et de la ou les sépiolites, éventuellement prémélangés ou dosés individuellement, et optionnellement d'un agent de gonflement chimique à l'alimentation d'une extrudeuse (simple vis, double vis, co-rotative, ou contre-rotative, première extrudeuse d'une disposition tandem, ...) ;
- plastification du mélange obtenu par chauffage à haute température du cylindre et mélange par la ou les vis pour fondre entièrement la masse et l'homogénéiser,
- optionnellement injection dans le cylindre d'un gaz de moussage à l'endroit où la viscosité du mélange est la plus appropriée,
- homogénéisation de la masse de polymères et du gaz,
- refroidissement de la masse et homogénéisation,
- extrusion à travers une filière, contrôlée en température, ayant une section de forme prédéfinie selon l'application finale de mousse, la masse subissant une chute importante de pression qui entraîne la formation de bulles de gaz après la sortie de la filière, provoquant la formation de mousse à l'air libre,
- refroidissement, étirage et guidage de la mousse :
- la mousse extrudée est guidée par une étireuse pratiquement sans tension, dans une section de refroidissement (air ou eau ou les deux) pour figer la structure désirée.

Conformément au procédé décrit ci-dessus, l'agent de gonflement utilisé peut être un ou plusieurs agents de gonflement physique ou chimique ou les deux simultanément.

Tous les modes de réalisation décrits précédemment peuvent être combinés dans la limite du raisonnable.

### Brève description des dessins

Des tests expérimentaux ont été effectués pour déterminer le comportement au feu de la composition de nanocomposite selon l'invention. De plus, des tests comparatifs ont également été réalisés avec des compositions de nanocomposite comprenant de la montmorillonite modifiée avec un sel d'ammonium quaternaire (cloisite ® 30B).

Les figures suivantes illustrent les résultats obtenus et montrent:
Fig. 1: représente les courbes de HRR obtenues pour différents mélanges de polymères :
   - PP,
   - 48% de PP, 40% de PA-6 et 12% de PPgAM,
   - 57% de PP, 38% de PA-6 et 5% de nanoparticules de sépiolite,
   - 45% de PP, 38% de PA-6, 5% de nanoparticules de sépiolite et 12% de PPgAM.
Fig. 2: représente les courbes de HRR pour différentes quantités de nanoparticules de sépiolite :
   - PP,
   - 47,4% de PP, 12% de PPgAM, 39.6% de PA-6, 1% de nanoparticules de sépiolite,
   - 46,2% de PP, 12% de PPgAM, 38.8% de PA-6, 3% de nanoparticules de sépiolite,
   - 45% de PP, 12% de PPgAM, 38% de PA-6, 5% de nanoparticules de sépiolite.
Fig.3: est une photo représentant des plaques de compositions de nanocomposite juste après leur inflammation et contiennent une quantité croissante de nanoparticules de sépiolite :
   - 48% PP, 12% de PPgAM, 40% de PA-6 et 0% de nanoparticules de sépiolite,
   - 47,7% de PP, 12% de PPgAM, 39,6% de PA-6 et 1% de nanoparticules de sépiolite,
   - 46,2% de PP, 12% de PPgAM, 38,8% de PA-6 et 3% de nanoparticules de sépiolite,
   - 45% de PP, 12% de PPgAM, 38% de PA-6 et 5% de nanoparticules de sépiolite.

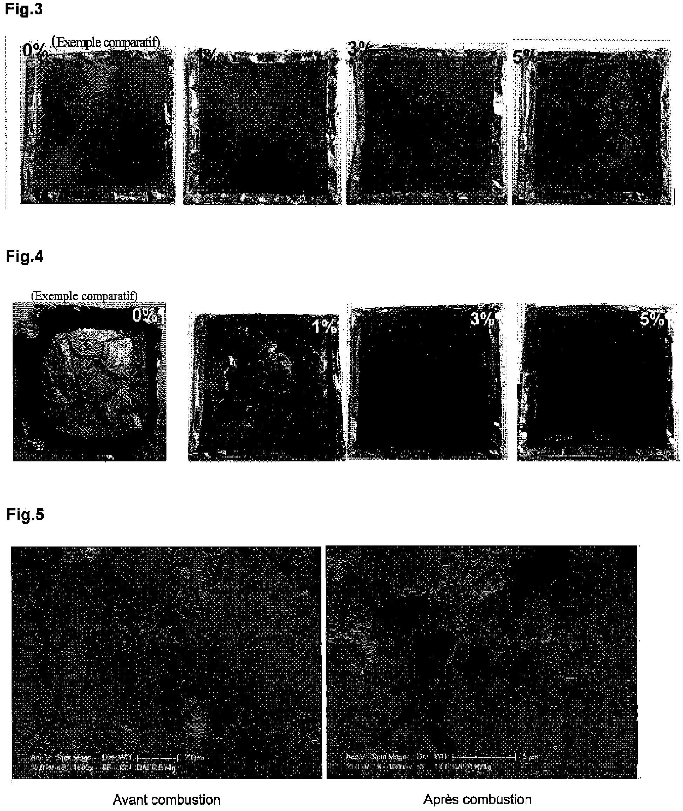

Fig.4 : est une photo représentant les mêmes plaques de compositions de nanocomposite à la fin de la combustion.
Fig.5 : est une photo obtenue par microscopie illustrant la formation d'un char lors de la combustion d'une composition de nanocomposite comprenant 48% de PP, 12% de PPgAM, 40% de PA et 5% de nanoparticules de sépiolite.

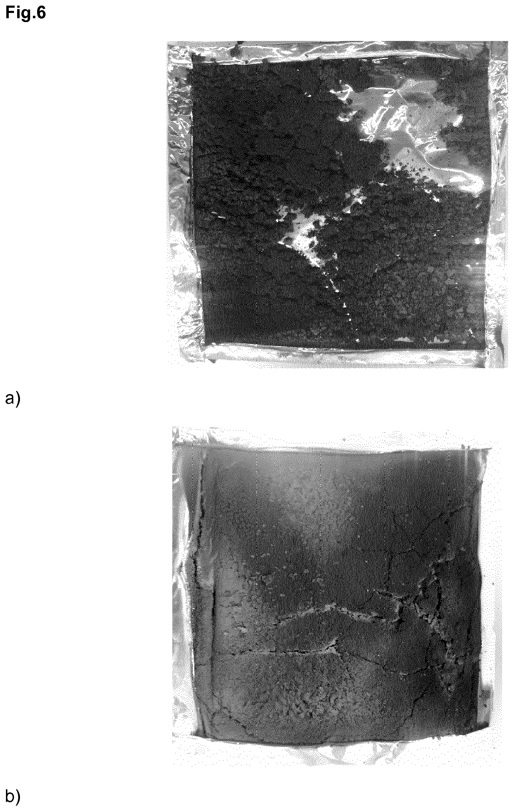

Fig.6 : représente 2 photos de résidus de composition de nanocomposite obtenus après combustion :
   - a) composition de nanocomposite comprenant 44% de PP, 38% de PA-6, 11% de PPgAM, et 7% de nanoparticules de montmorillonite modifiée avec un sel d'ammonium quaternaire (cloisite ® 30B), il a été incorporé 7% de nanoparticules de montmorillonite modifiée avec un sel d'ammonium quaternaire afin d'obtenir un taux inorganique de 5% identique pour la composition a) et b) puisque la sépiolite n'est pas traitée en surface alors que la montmorillonite contient le sel d'ammonium quaternaire,
   - b) composition de nanocomposite comprenant 45% de PP, 38% de PA-6, 12% de PPgAM et 5% de nanoparticules de sépiolite naturelle.

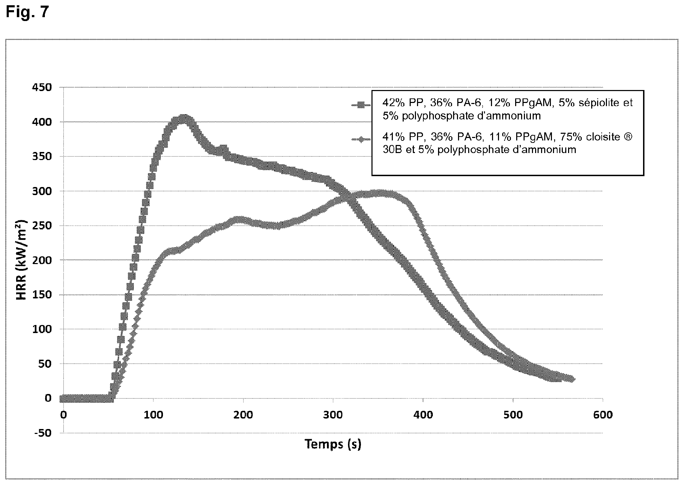

Fig.7 : représente les courbes de HRR des compositions de nanocomposite comprenant :
   - 42% de PP, 36% de PA-6, 12% de PPgAM, 5% de sépiolite et 5% polyphosphate d'ammonium,
   - 41% de PP, 36% de PA-6, 11% de PPgAM, 7% de montmorillonite modifiée avec un sel d'ammonium quaternaire (cloisite ® 30B) et 5% polyphosphate d'ammonium.

### Tests expérimentaux

### 1) Comportement au feu de la composition de nanocomposite comprenant du PP, PA-6, PPgAM et des nanoparticules de sépiolite naturelle.

Tous les mélanges ont été préparés dans un mélangeur interne type brabender® pendant 10min à 240°C. Un masterbatch contenant 30% de sépiolite naturelle dans du PPgAM a été préparé et utilisé pour mélanger la sépiolite avec le PP et le PA-6 dans le cas des compositions de nanocomposite comprenant la sépiolite naturelle.

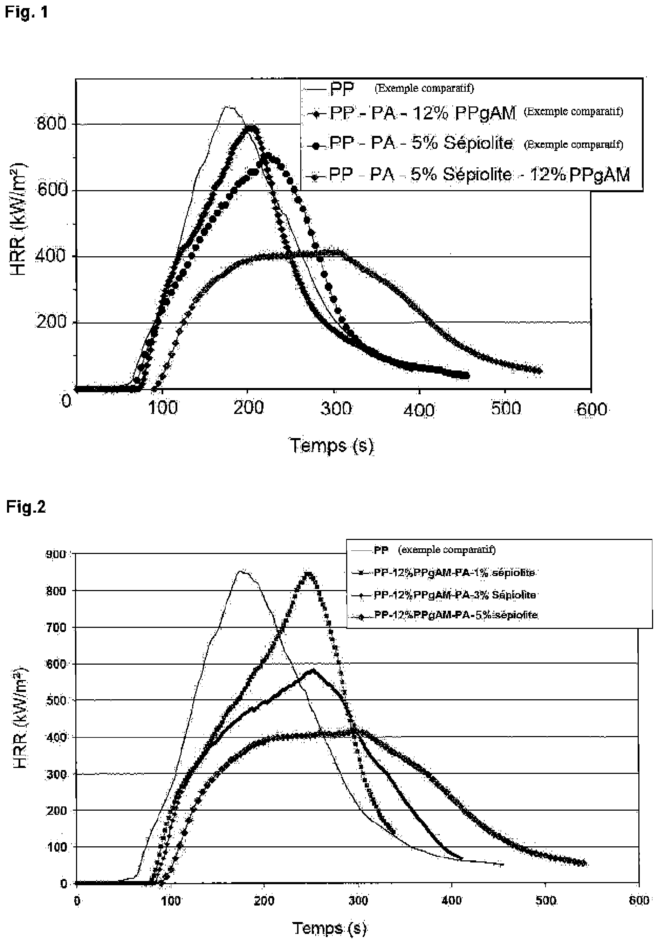

La Fig.1 montre les courbes de HRR obtenues avec différentes compositions de nanocomposite. Il peut être observé qu'une réduction significative du pHRR est obtenue dans le cas de la composition de nanocomposite comprenant simultanément du PP, PA-6, 5% de sépiolite et 12% de PPgAM. En effet, on observe une diminution du pHRR de plus de 50% par rapport au pHRR obtenu dans le cas de la composition ne comprenant que le PP. Cette réduction de pHRR est due à la formation de char à la surface du matériau.

Il a également été évalué la différence de pHRR obtenu selon la quantité de nanoparticules de sépiolite contenue dans la composition de nanocomposite. Les résultats, illustrés à la Fig.2, révèlent que la diminution du pHRR est corrélée à l'augmentation de la quantité de nanoparticules de sépiolite. On observe ainsi une réduction significative à partir d'une quantité de 3% de nanoparticules de sépiolite. La réduction du pHRR atteint environ 50% lorsque la quantité de sépiolite atteint 5% en poids par rapport au poids total de la composition.

Parallèlement à la mesure des pHRR, les chars formés après la combustion des compositions de nanocomposite ont également été observés. En particulier sur la Fig.3, il apparaît que la quantité de char formée augmente avec la quantité de nanoparticules de sépiolite présente dans le mélange. Les photos de la Fig.4 concernent les résidus obtenus à l'issue de la combustion des compositions de nanocomposite. Ces photos illustrent le fait que la stabilité thermique des compositions de nanocomposite augmente en fonction de la quantité de nanoparticules de sépiolite présentes dans la composition. La formation de la couche de char qui protège la phase de PP de l'air est donc proportionnelle à la quantité de nanoparticules de sépiolite.

La fig.5 montre la structuration du char formé lors de la combustion d'une composition comprenant 48% de PP, 12% de PPGAM, 40% de PA-6 et 5% de nanoparticules de sépiolite. Au cours de cette combustion, le PA consuit à la formation du char dont les résistances thermique et mécanique sont améliorées par l'action des nanoparticules de sépiolite.

### 2) Comparaison de la composition de nanocomposite comprenant de la sépiolite naturelle avec celle comprenant de la montmorillonite modifiée avec un sel d'ammonium quaternaire.

Au cours de ces expérimentations, deux paramètres ont été mesurés. La cohésivité des chars obtenus après la combustion des deux compositions de nanocomposite et le pHRR relevé.

La fig. 6 représente les chars obtenus après la combustion des compositions comprenant 45% de PP, 38% de PA-6, 12% de PPgAM et soit des nanoparticules de sépiolite naturelle (5%) ou des nanoparticules de montmorillonite modifiée avec un sel d'ammonium quaternaire (Cloisite ® 30B) (7%). Les photos présentées révèlent que le char obtenu après combustion de la composition de nanocomposite selon l'invention est beaucoup plus cohésif que celui obtenu avec la montmorillonite modifiée avec le sel d'ammonium quaternaire (Cloisite ® 30B). La couche de char formée à partir de la composition de nanocomposite comprend de la sépiolite naturelle est donc plus épaisse et plus dense que celle produite par la composition comprenant les nanoparticules de montmorillonite modifiée avec le sel d'ammonium quaternaire. La surface de cohésion, correspondant à la surface du matériau restant unifié après la combustion par rapport à sa surface initiale, est de 80% en ce qui concerne la composition de nanocomposite comprenant les nanoparticules de sépiolite naturelle alors qu'elle est réduite à 20 % pour la composition de nanocomposite comprenant les nanoparticules de montmorillonite modifiée avec le sel d'ammonium quaternaire. En conséquence, la couche de char formée par la composition comprenant des nanoparticules de sépiolite permet de protéger de l'air la phase PP de façon plus efficace que celle produite par la composition comprenant les nanoparticules de montmorillonite modifiée avec le sel d'ammonium quaternaire (Cloisite ® 30B).

Le pHRR de compositions de nanocomposite comprenant soit de la sépiolite naturelle ou de la montmorillonite modifiée avec le sel d'ammonium quaternaire, en combinaison avec un retardateur de flamme phosphoré APP (AP750), a été mesuré. La fig.7 représente les courbes d'HRR mesuré dans les deux cas. Alors que le pHRR obtenu avec la composition comprenant la montmorillonite modifiée avec le sel d'ammonium quaternaire atteint 400kW/m² (à environ 125 secondes), le pHRR relevé pour la composition comprenant la sépiolite naturelle n'excède pas les 300 kW/m² (à environ 350 secondes). Non seulement le pHRR relevé dans le cas de composition comprenant la sépiolite naturelle est plus faible mais il apparaît aussi plus tardivement.

Au vu de ces résultats, il apparaît que la composition selon l'invention présente de bonnes propriétés au feu.

De façon étonnante, il a également été démontré que les résultats obtenus avec la composition selon l'invention étaient supérieurs à ceux obtenus avec une composition de nanocomposite comprenant les nanoparticules de montmorillonite modifiée avec le sel d'ammonium quaternaire. En effet, ces résultats vont à l'encontre de l'enseignement habituel de l'état de la technique, favorisant les propriétés au feu des compositions de nanocomposite comprenant des nanoparticules de montmorillonite ou de montmorillonite modifiée avec le sel d'ammonium quaternaire. Alors que l'état de la technique décrit que l'utilisation de la sépiolite dans des compositions de nanocomposite ne montre pas des propriétés au feu satisfaisantes, la présente invention a permis d'établir qu'une composition de nanocomposite comprenant simultanément du PP, PA-6, PPgAM et des nanoparticules de sépiolite pouvait permettre d'atteindre de meilleurs résultats en comparaison à son équivalent comprenant des nanoparticules de montmorillonite modifiée avec le sel d'ammonium quaternaire.

## Revendications

1. Composition de nanocomposite comprenant un mélange contenant au moins un polypropylène, au moins un polyamide, au moins un polypropylène greffé d'anhydride maléique et des nanoparticules de sépiolite.

2. La composition de nanocomposite selon la revendication 1 dans laquelle les nanoparticules de sépiolite sont de type sépiolite naturelle.

3. La composition de nanocomposite selon l'une quelconque des revendications 1 à 2 dans laquelle le polyamide est un polyamide-6 (PA-6).

4. La composition de nanocomposite selon l'une quelconque des revendications 1 à 3 dans laquelle la quantité de polypropylène est comprise entre 40 et 80% en poids par rapport au poids total de la composition.

5. La composition de nanocomposite selon l'une quelconque des revendications 1 à 4, dans laquelle la quantité de polyamide est comprise entre 5 et 40% en poids par rapport au poids total de la composition.

6. La composition de nanocomposite selon l'une quelconque des revendications 1 à 5 dans laquelle la quantité de polypropylène greffé d'anhydride maléique est comprise entre 0,5% en poids et 15% en poids par rapport au poids total de la composition.

7. La composition de nanocomposite selon l'une quelconque des revendications 1 à 6 dans laquelle la quantité de nanoparticules de sépiolite est comprise entre 2 et 15% en poids par rapport au poids total de la composition.

8. La composition de nanocomposite selon l'une des revendications 1 à 7 qui comprend un composé retardateur de flamme.

9. La composition de nanocomposite selon l'une des revendications 1 à 8 dans laquelle le composé retardateur de flamme est le polyphosphate d'ammonium.

10. La composition de nanocomposite selon l'une quelconque des revendications 1 à 9 dans laquelle la quantité de composé de retardateur de flamme est comprise entre 0,01 et 20% en poids par rapport au poids total de la composition.

11. La composition de nanocomposite selon l'une quelconque des revendications 1 à 10 qui comprend au moins un additif sélectionné parmi : les anti-oxydants, les anti-UV, les anti-statiques, les nucléateurs de cristallisation, les lubrifiants, les absorbeurs et/ou les réflecteurs d'infra-rouge, les couleurs, les charges de renforcement, les agents d'oxo-dégradation.

12. Mousse comprenant la composition de nanocomposite selon l'une quelconque des revendications 1 à 11.

13. Un article manufacturé comprenant la composition de nanocomposite selon l'une quelconque des revendications 1 à 11.

14. L'article manufacturé selon la revendication 13 qui est sélectionné parmi les carpettes, les pièces extrudées ou moulées dans le domaine des moyens de transport ou dans le bâtiment, ou les articles ménagers ou de loisirs.

15. Procédé de fabrication de la composition de nanocomposite selon l'une quelconque des revendications 1 à 11 comprenant les étapes de :
- préparation d'un pré-mélange comprenant du PPgAM et 30% de nanoparticules de sépiolite,
- mélange du pré-mélange obtenu à l'étape précédente avec du PP et du PA.

16. Utilisation de la composition de nanocomposite selon l'une quelconque des revendications 1 à 11 pour la fabrication d'un article manufacturé.

## Patentansprüche

1. Nanokompositzusammensetzung, die ein Gemisch umfasst, das mindestens ein Polypropylen, mindestens ein Polyamid, mindestens ein mit Maleinsäureanhydrid gepfropftes Polypropylen und Sepiolith-Nanopartikel enthält.

2. Nanokompositzusammensetzung nach Anspruch 1, wobei die Sepiolith-Nanopartikel vom natürlichen Sepiolith-Typ sind.

3. Nanokompositzusammensetzung nach einem der Ansprüche 1 bis 2, wobei das Polyamid ein Polyamid-6 (PA-6) ist.

4. Nanokompositzusammensetzung nach einem der Ansprüche 1 bis 3, wobei die Polypropylenmenge zwischen 40 und 80 Gew.-% liegt, bezogen auf das Gesamtgewicht der Zusammensetzung.

5. Nanokompositzusammensetzung nach einem der Ansprüche 1 bis 4, wobei die Polyamidmenge zwischen 5 und 40 Gew.-% liegt, bezogen auf das Gesamtgewicht der Zusammensetzung.

6. Nanokompositzusammensetzung nach einem der Ansprüche 1 bis 5, wobei die Menge des mit Maleinsäureanhydrid gepfropften Polypropylens zwischen 0,5 Gew.-% und 15 Gew.-% liegt, bezogen auf das Gesamtgewicht der Zusammensetzung.

7. Nanokompositzusammensetzung nach einem der Ansprüche 1 bis 6, wobei die Menge der Sepiolith-Nanopartikel zwischen 2 und 15 Gew.-% liegt, bezogen auf das Gesamtgewicht der Zusammensetzung.

8. Nanokompositzusammensetzung nach einem der Ansprüche 1 bis 7, die eine Flammschutzverbindung umfasst.

9. Nanokompositzusammensetzung nach einem der Ansprüche 1 bis 8, wobei die Flammschutzverbindung Ammoniumpolyphosphat ist.

10. Nanokompositzusammensetzung nach einem der Ansprüche 1 bis 9, wobei die Flammschutzmittelmenge zwischen 0,01 und 20 Gew.-% liegt, bezogen auf das Gesamtgewicht der Zusammensetzung.

11. Nanokompositzusammensetzung nach einem der Ansprüche 1 bis 10, die mindestens ein Additiv umfasst, das aus den folgenden Additiven ausgewählt ist: Antioxidationsmittel, UV-Schutzmittel, Antistatika, Kristallisationskeimbildner, Gleitmittel, Infrarotabsorptions- und/oder - reflexionsmittel, Farben, Verstärkungsfüllstoffe, Sauerstoffabbaumittel.

12. Schaumstoff, der die Nanokompositzusammensetzung nach einem der Ansprüche 1 bis 11 umfasst.

13. Erzeugnis, das die Nanokompositzusammensetzung nach einem der Ansprüche 1 bis 11 umfasst.

14. Erzeugnis nach Anspruch 13, das aus Teppichbrücken, extrudierten oder gegossenen Teilen für den Verkehrsmittelbereich oder in Gebäuden oder Haushaltswaren oder Unterhaltungsartikeln ausgewählt ist.

15. Verfahren zur Herstellung der Nanokompositzusammensetzung nach einem der Ansprüche 1 bis 11, das die folgenden Schritte umfasst:
- Herstellen eines Vorgemischs, das PPgAM und 30 % Sepiolith-Nanopartikel umfasst,
- Mischen des im vorherigen Schritt erhaltenen Vorgemischs mit dem PP und dem PA.

16. Verwendung der Nanokompositzusammensetzung nach einem der Ansprüche 1 bis 11 zur Herstellung eines Erzeugnisses.

## Claims

1. A nanocomposite composition comprising a mixture containing at least one polypropylene, at least one polyamide, at least one maleic anhydride-grafted polypropylene and sepiolite nanoparticles.

2. The nanocomposite composition according to claim 1, in which the sepiolite nanoparticles are of the natural sepiolite type.

3. The nanocomposite composition according to either one of claims 1 to 2, in which the polyamide is a polyamide-6 (PA-6).

4. The nanocomposite composition according to any one of claims 1 to 3, in which the quantity of polypropylene is between 40 and 80% by weight relative to the total weight of the composition.

5. The nanocomposite composition according to any one of claims 1 to 4, in which the quantity of polyamide is between 5 and 40% by weight relative to the total weight of the composition.

6. The nanocomposite composition according to any one of claims 1 to 5, in which the quantity of maleic anhydride-grafted polypropylene is between 0.5% by weight and 15% by weight relative to the total weight of the composition.

7. The nanocomposite composition according to any one of claims 1 to 6, in which the quantity of sepiolite nanoparticles is between 2 and 15% by weight relative to the total weight of the composition.

8. The nanocomposite composition according to one of claims 1 to 7, which comprises a flame-retardant compound.

9. The nanocomposite composition according to one of claims 1 to 8, in which the flame-retardant compound is ammonium polyphosphate.

10. The nanocomposite composition according to any one of claims 1 to 9, in which the quantity of flame-retardant compound is between 0.01 and 20% by weight relative to the total weight of the composition.

11. The nanocomposite composition according to any one of claims 1 to 10, which comprises at least one additive selected from: antioxidants, UV stabilisers, antistatic agents, crystal nucleating agents, lubricants, infrared absorbing and/or reflecting agents, colorants, reinforcing fillers or oxo-degradation agents.

12. A foam comprising the nanocomposite composition according to any one of claims 1 to 11.

13. A manufactured article comprising the nanocomposite composition according to any one of claims 1 to 11.

14. The manufactured article according to claim 13, which is selected from foot mats, extruded or moulded parts in the field of means of transport or in building, or household or leisure articles.

15. A method for manufacturing the nanocomposite composition according to any one of claims 1 to 11 comprising the steps of:
- preparing a premix comprising PPgAM and 30% sepiolite nanoparticles,
- mixing the premix obtained in the previous step with PP and PA.

16. Use of the nanocomposite composition according to any one of claims 1 to 11 for manufacturing a manufactured article.
